# EUROPEAN PATENT SPECIFICATION

(11) **EP 2 592 594 B1**
(45) Date of publication and mention of the grant of the patent: **17.08.2016**
(21) Application number: 11803841.3
(22) Date of filing: 08.07.2011
(51) Int. Cl.: G06Q 50/00, G06F 17/21, H04L 12/58

(54) **METHOD FOR CREATING/ISSUING ELECTRONIC DOCUMENT DISTRIBUTION CERTIFICATE AND SYSTEM FOR DISTRIBUTING ELECTRONIC DOCUMENT**
VERFAHREN ZUR ERSTELLUNG / AUSGABE EINES ZERTIFIKATS ZUR VERTEILUNG ELEKTRONISCHER DOKUMENTE UND SYSTEM ZUR VERTEILUNG ELEKTRONISCHER DOKUMENTE
PROCÉDÉ POUR CRÉER/GÉNÉRER UN CERTIFICAT DE DISTRIBUTION DE DOCUMENT ÉLECTRONIQUE ET SYSTÈME POUR DISTRIBUER UN DOCUMENT ÉLECTRONIQUE

(30) Priority: 07.07.2011 KR 20110067188; 21.12.2010 KR 20100131936; 21.12.2010 KR 20100131935; 08.07.2010 KR 20100065985
(43) Date of publication of application: 15.05.2013
(73) Proprietor: Korea Internet & Security Agency, Seoul 05717 (KR)
(72) Inventor: AN, Dae Seob, Seoul 139-777 (KR); LEE, Jung Gu, Seoul 138-930 (KR); KONG, Seong Pil, Seongnam-si Gyeonggi-do 463-764 (KR); LIM, Yeong Cheol, Seoul 151-050 (KR)
(74) Representative: Bingham, Ian Mark
(86) International application number: PCT/KR2011/005039
(87) International publication number: WO 2012/005555

(56) References cited:
- WO-A1-2005/098566
- WO-A1-2008/018744
- KR-A- 20050 078 402
- KR-A- 20080 014 194
- KR-A- 20090 027 554
- KR-B1- 100 653 512
- US-A1- 2002 059 525

## Description

### [Technical Field]

The present invention relates to a method for creating/issuing an electronic document distribution certificate capable of providing a transparent and efficient issuing service. and enhancing reliability of distribution of the electronic document due to compatibility guarantee of a certificate, in creating, distributing, and storing a distribution certificate within a system for distributing an electronic document based on a certified electronic address, a method for verifying an electronic document distribution certificate, and a system for distributing an electronic document.

### [Background Art]

Generally, an electronic document distribution has limitedly been conducted only within a specific industrial group or a community based on individual inherent regulations of enterprises/organizations.

There are disadvantages in that e-mail has been used as an auxiliary means between individuals and between individuals and enterprises/organizations without a concept of trusted electronic distribution or one-line communications may be made only by a method of accessing individuals, individual businesses, small-scale enterprises to large-scale enterprises.

Therefore, enterprises holding a predetermined scale of distribution system and individuals, individual businesses, and small-scale enterprises need to build an electronic document distribution based infrastructure capable of guaranteeing reliability of distribution.

WO2005/098566 discloses a method and systems for linking a certificate to the signed file to which it is associated. The address or URL wherein the certificate is stored is encoded in the filename of the signed file so as to be transmitted jointly with the file. When receiving such a signed file, a first step consists in extracting and decoding the certificate address from the filename. Using the certificate address, the certificate can be accessed and checked before opening and authenticating the signed file. The signature of a signed file is based on the file content and on a private key while the corresponding certificate comprises at least the corresponding public key.

WO2008/018744 discloses an electronic document repository system which guarantees authenticity of electronic document and issues certificates and methods of registering, reading, issuing, and transferring electronic documents in the system, and a method of issuing certificates in the system. The electronic document repository system includes an authentication module, a registration module, a reading module, an issuing module, and a certification module.

US2002/059525 discloses authenticating the contents of e-documents, wherein the sender sends an original email, and attachment(s), to: the recipient(s), and an email copy, cc: to an authentication service. The authentication service encrypts the email and attachment(s); and returns the encrypted file to both the sender and the recipient(s). Either the sender or the recipients can return the encrypted file to the authentication service for unencryption and reproduction of the exact original email and attachment(s). Whoever returns the encrypted file for authentication will be notified that the file was either altered or the unencrypted contents (exact reproduction of original email and attachments) will be returned, via email. The sender and recipients require no additional software other than their existing email communication software running on a host electronics platform. The authentication service retains no data from the process.

### [Detailed Description of the Invention]

### [Technical Problem]

The present invention has been made in an effort to provide a method for creating/issuing an electronic document distribution certificate capable of providing a transparent and efficient issuing service and enhancing reliability of distribution of the electronic document due to compatibility guarantee of a certificate, in creating, distributing, and storing a distribution certificate within a system for distributing an electronic document based on a certified electronic address. Further, the present invention has been made in an effort to provide a method for verifying a distribution certificate helping to correctly utilize a certificate by defining a standardized verifying method of a distribution certificate. In addition, the present invention has been made in an effort to provide a system for distributing an electronic document capable of guaranteeing reliability of distribution.

### [Technical Solution]

A method for creating/issuing an electronic document distribution certificate according to an exemplary embodiment of the present invention as herein described in the claims.

### [Advantageous Effects]

As set forth above, according to the exemplary embodiments of the present invention, it is possible to provide the transparent and efficient issuance service, in creating, distributing, and storing the distribution certificate within the system for distributing an electronic document based on the certified electronic address.

According to the exemplary embodiments of the present invention, it is possible to enhance the reliability of distribution of the electronic document by guaranteeing the compatibility in the certificate within a system for distributing an electronic document based on a certified electronic address.

According to the exemplary embodiments of the present invention, it is possible to provide the method for verifying a distribution certificate helping to correctly utilize a certificate by defining the standardized verifying method for the distribution certificate.

### [Brief Description of Drawings]

FIG. 1 is a diagram for describing creation and issuance of a distribution certification according to an exemplary embodiment of the present invention.
FIG. 2 is a diagram illustrating a process for creating and issuing a distribution certificate according to an exemplary embodiment of the present invention.

### [Best Mode]

A method for creating/issuing an electronic document distribution certificate, a method for verifying an electronic document distribution certificate, and a system for distributing an electronic document according to exemplary embodiments of the present invention will be described below with reference to the accompanying drawings and Tables.

A method for creating an electronic document distribution certificate according to an exemplary embodiment of the present invention includes: (a) transmitting, by a transmitting entity, a distribution message including a transmitter's electronic document to a receiving entity; (b) receiving, by the receiving entity, the distribution message and acquiring essential information to create a reception certificate; (c) transmitting, by the receiving entity, the created reception certificate to the transmitting entity; (d) completing, by the transmitting entity, verification on the received reception certificate and then, attaching verification information on an electronic signature certificate of the reception certificate to the reception certificate; and (e) transmitting, by the transmitting entity, the reception certificate to a third party storage authority to request the storage.

A method for verifying an electronic document distribution certificate according to another exemplary embodiment of the present invention includes: verifying whether a format of the distribution certificate observes constraints of predefined structures and values; verifying whether transmitting, receiving, and reading date and time of a distribution message that are established in a distribution certificate, an issuance date of a distribution certificate, a verification time of a certification, and an effect expiration date of a certificate are ordered; verifying an electronic signature attached to the distribution certificate; and verifying validity of an authentication certificate that an electronic signature is written in the distribution certificate and verifying identity with information on an issuer of the distribution certificate.

A system for distributing an electronic document according to yet another exemplary embodiment of the preset invention includes: transmitting and receiving entities that distribute an electronic document through a distribution messaging server transmitting and receiving a message based on an electronic address and issuing and managing a distribution certificate for message transmission and reception; a distribution hub that registers/manages the electronic addresses of the transmitting and receiving entities, sets an electronic document distribution path between the transmitting and receiving entities, performs message transmission when errors are created during an electronic document distribution process between the transmitting and receiving entities, and issues the distribution certificate; and a trusted third party storage authority that receives and stores the distribution certificate, wherein the distribution certificate includes a reception certificate for non-repudiation for the fact that a receiving entity receives a message, a transmission certificate for verifying a transmission try of the transmitting entity, and a reading certificate for non-repudiation for the fact that a receptor reads the received message.

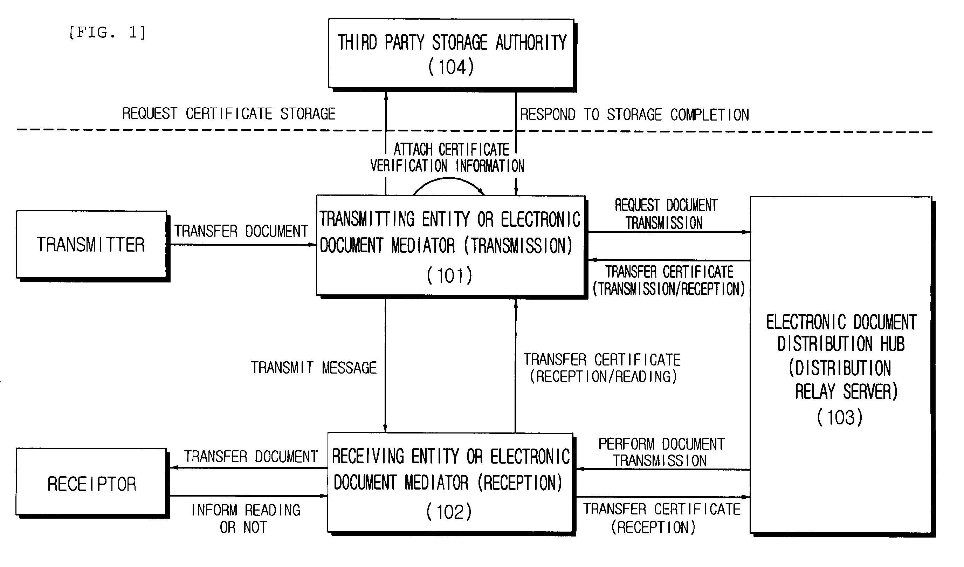

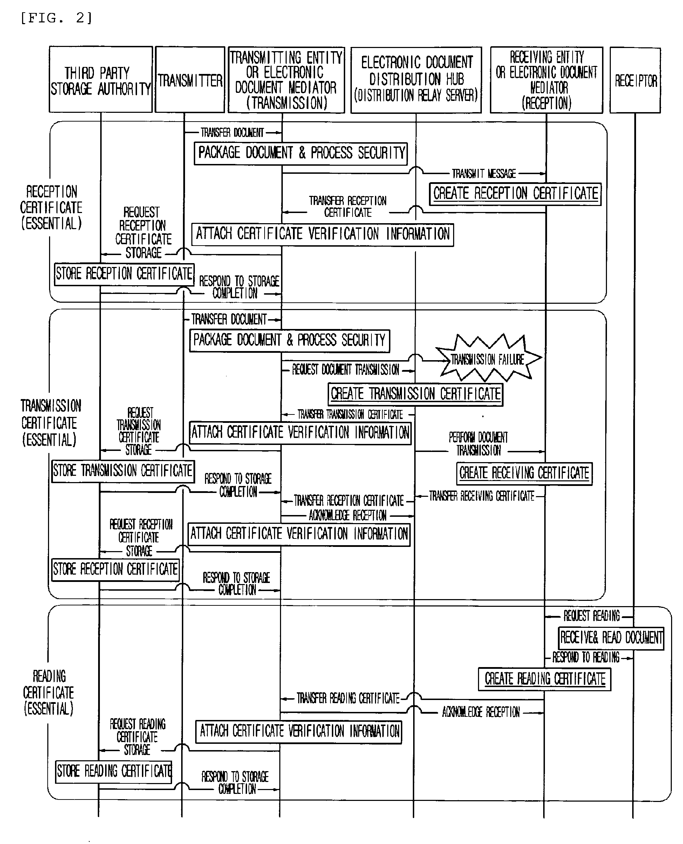

The method for creating an electronic document distribution certificate, the method for verifying an electronic document distribution certificate, and the system for distributing an electronic document according to the exemplary embodiments of the present invention having the foregoing configuration will be described in detail with reference to FIGS. 1 and 2.

### [Model for creating and issuing electronic document distribution certificate]

FIG. 1 illustrates components for creating and issuing a distribution certificate according to an exemplary embodiment of the present invention and each component will be described with reference to the following ① to ④
① A transmitting entity (or transmitting electronic document mediator, hereinafter, referred to as transmitting entity 101): basically transmits a transmitter's electronic document to a receiving entity or if necessary, requests a transmission to a distribution relay server. The transmitting entity serves to verify the distribution certificate received from the receiving entity or the distribution relay server and then, attach the verification information to the distribution certificate to be stored in a third party storage authority, in connection with the distribution certificate.
② A receiving entity (or receiving electronic document mediator, hereinafter, referred to as receiving entity 102): basically, transfers the electronic document received from the transmitting entity or the distribution relay server to a receiptor). The receiving entity serves to create the reception certificate as soon as receiving the electronic document from the transmitting entity or the distribution relay server and transmit the created certificate to the transmitting entity or the distribution relay server as a response message or create a reading certificate immediately after the receiptor reads the electronic document and transfer the created reading certificate to the transmitting entity, in connection with the distribution certificate.
③ An electronic document distribution hub (or distribution relay server 103): basically, transfers an electronic document receiving a transmission request from the transmitting entity to the receiving entity. The electronic document distribution hub serves to create the transmission certificate as soon as receiving the transmission request of the electronic document from the transmitting entity so as to be transmitted to the transmitting entity or transfer the electronic document to the receiving entity and then, transfer the reception certificate received as a response to the transmission certificate to the transmitting entity, in connection with the distribution certificate.
④ A third party storage authority (certified electronic document storage authority 104) serves to safely store the distribution certificate as a trusted authority. Hereinafter, in describing the present invention, reference numerals of FIG. 1 will be omitted.

### [Type and process of electronic document distribution certificate]

The essential information required to create the electronic document distribution certificate according to the present invention is as the following Table 1.

**[Table 1]**

| Type | Purpose | Creation Subject/Time | Essential information |
|---|---|---|---|
| Reception certificate | Non-repudiation for message receiving fact of receiving entity | Receiving entity/immediately after reception | Document information, transmitter, receiptor, transmitter transmitting time, receiptor receiving time |
| Transmission certificate | Verification for transmission try of transmitting entity | Distribution relay server/immediately after reception of transmission request message | Document information, transmitter, receiptor, transmitter transmission requesting time |
| Reading Certificate | Non-repudiation for fact that receiptor reads received message | Receiving entity/immediately after being read by receiptor | Document information, transmitter, receiptor, transmitter transmitting time, receiptor receiving time, receiptor reading time |

A method for acquiring essential information on the electronic document distribution certificate according to the present invention is as the following Table 2.

**[Table 2]**

| Type | Essential information | Method for acquiring information |
|---|---|---|
| Reception certificate | Document information, transmitter, receiptor, transmitter transmitting time | Use the sensitive field value of the distribution message and the SOAP message within the distribution linkage message transmitted by the transmitting entity |
| | Receiptor receiving time | Use the receiving time of the distribution messaging server of the receiving entity |
| Transmission certificate | Document information, transmitter, receiptor | Use the sensitive field value of the distribution message within the distribution linkage message transmitted by the transmitting entity |
| | Transmitter transmission requesting time | Use the receiving time of the distribution relay server |
| Reading Certificate | Document information, transmitter, receiptor, transmitter transmitting time | Use the sensitive field value of the distribution message and the SOAP message within the distribution linkage message transmitted by the transmitting entity |
| | Receiptor receiving time | Use the receiving time of the distribution messaging server by the receiving entity |
| | Receiptor reading time | Use the response time of the receiving entity for the document information request of the receiptor |

The system time of the distribution messaging server and the distribution relay server needs to be periodically synchronized with the time of externally authorized institution.

All of the processes involved in the electronic document distribution certificate according to the present invention are illustrated in FIG. 2.

The reception certificate is an electronic document distribution certificate created for verifying the fact that the electronic document distribution message is received from the transmitting entity and the processes involved in the reception certificate are as the following Table 3.

**[Table 3]**

| No. | Process Name |
|---|---|
| 1 | The transmitting entity transmits the distribution message including the transmitter's electronic document to the receiving entity |
| 2 | The receiving entity receives the distribution message and then, immediately receives the essential information to create the reception certificate |
| 3 | The receiving entity transmits the created reception certificate to the transmitting entity |
| 4 | The transmitting entity completes verification for the reception certificate and then, attaches the verification information on the electronic signature certificate of the reception certificate to the reception certificate |
| 5 | The transmitting entity transmits and stores the reception certificate to the certified electronic document storage authority. |

When the transmitting entity tries the distribution message transmission to the receiving entity but fails in the distribution message transmission, and thus requests the transmission of the corresponding message to the distribution relay server, the transmission certificate is created by the distribution relay server for verifying the fact that the transmitting entity makes the transmission request and transmitted to the transmitting entity. The process involved in the transmission certificate is as the following Table 4.

**[Table 4]**

| No. | Process Name |
|---|---|
| 1 | The transmitting entity transmits the distribution message to the receiving entity. |
| 2 | When the distribution message transmission fails, the transmitting entity requests the distribution message transmission to the distribution relay server. |
| 3 | The distribution relay server creates the transmission certificate for the requested transmission. |
| 4 | The distribution relay server transmits the transmission certificate to the transmitting entity. |
| 5 | The transmitting entity completes verification for the transmission certificate and then, attaches the verification information on the electronic signature certificate of the transmission certificate to the transmission certificate. |
| 6 | The transmitting entity stores the transmission certificate in the certified electronic document storage authority. |
| 7 | The distribution relay server transfers the distribution message to the receiving entity. |
| 8 | The receiving entity creates the reception certificate immediately after the reception of the electronic document. |
| 9 | The receiving entity transmits the reception certificate to the distribution relay server |
| 10 | The distribution relay server transfers the reception certificate to the transmitting entity. |
| 11 | The transmitting entity completes the verification for the reception certificate and then, attaches the verification information on the electronic signature certificate of the reception certificate to the reception certificate |
| 12 | The transmitting entity transmits and stores the reception certificate to the certified electronic document storage authority. |

The reading certificate is a certificate that is created by the receiving entity and is transmitted to the transmitting entity so as to verify that the receiptor reads the message received from the transmitting entity by the receiving entity and the process involved in the reading certificate is as the following Table 5.

**[Table 5]**

| No. | Process Name |
|---|---|
| 1 | The receiptor requests the reading of the distribution message to the receiving entity to read the distribution message received as a response. |
| 2 | The receiving entity creates the reading certificate. |
| 3 | The receiving entity completes the verification for the reading certificate and then, attaches the verification information on the electronic signature certificate of the reading certificate to the reading certificate. |
| 4 | The transmitting entity transmits and stores the reading certificate to the certified electronic document authority. |

### [Basic preconditions and considerations involved in issuance and verification of distribution certificate]

The basic preconditions and considerations involved in the issuance and verification of the distribution certificate are as the following ① to ⑨.
① The distribution certificate is created and verified by the distribution messaging server and the distribution relay server of the transmitting and receiving entities.
② In the present invention, the distribution certificate is electronically signed and created only based on an NPKI certificate.
③ The corresponding distribution certificate is created based on the distribution message. Even though at least two electronic documents are included in a single distribution message, only one distribution certificate created.
④ The distribution certificate needs to be allocated with an ID that can identify the distribution message and an electronic document identifier or an electronic document name that can identify the electronic document within the distribution message.
⑤ A serial number of the distribution certificate is created by individual transmitting and receiving entities and thus uses a random number of 32 bytes so as to allocate uniqueness.
⑥ Update and revocation of the distribution certificate is not defined in terms of characteristics of the distribution system.
⑦ The distribution messaging server needs to maintain the synchronization with the visual information of the external trusted institution at all times, thereby guaranteeing the reliability of the visual information within the distribution certificate.
⑧ The policies of the distribution certificate use only an object identifier (OID) and a name that are defined in the present technology standard.
⑨ The transmitting entity verifies the received distribution certificate and then, attaches the verification information on the signature certificate of the distribution certificate to the distribution certificate.

### [Structure of electronic document distribution certificate]

The electronic document distribution certificate is created by the transmitting and receiving entities and electronically signed by using the NPKI certificate of the transmitting and receiving entities. The basic structure of the electronic document distribution certificate uses a SignedData structure of a CMS standard to use the same content identifier as the certificate of the certified electronic document authority.

ContentType of the electronic document distribution certificate is as the following Table 6.

**[Table 6]**

| |
|---|
| ```
id-kiec-arcCertReseponse OBJECT IDENTIFIER ::= {iso(1) member-body(2) korea(410)
kiec(200032) certificate(2) 2}
ARCCertResponse ::= CHOICE {
arcCertInfo [0] EXPLICIT ARCCertInfo,
arcErrorNotice [1] EXPLICIT ARCErrorNotice }
``` |

A basic field of the electronic document distribution certificate is as the following Table 7.

**[Table 7]**

| |
|---|
| ```
ARCCertInfo ::= SEQUENCE {
version [0] EXPLICIT ARCVersion DEFAULT v1,
serialNumber SerialNumber,
issuer GeneralNames,
dateOfIssue GeneralizedTime,
dateOfExpire DateOfExpiration,
policy ARCCertificatePolicies,
requestlnfo RequestInfo,
target TargetToCertify,
extionsions [1] EXPLICIT Extensions OPTIONAL }
``` |

The detailed contents of the basic field of the foregoing distribution certificate are the following to .

### ① Version, Version

A version of the structure of the electronic document distribution certificate is represented.

For the electronic document distribution certificate, the version is set to be v9 and uses a distributionlnfos type of a target field.

**[Table 8]**

| |
|---|
| ```
ARCVersion ::= INTEGER {v1(1), v2(2), v9(9)}
``` |

### ② SerialNumber, Serial number

The identification information of the electronic document distribution certificate is represented.

The serial number of the electronic document distribution certificate uses a random number of 32 bytes so as to be created as a unique amount of integer value. In order to process the electronic document distribution certificate, there is a need to process a serial number of 32 bytes.

**[Table 9]**

| |
|---|
| ```
SerialNumber ::= INTEGER
``` |

### ③ Issuer, Issuer of certificate

A subject issuing the electronic document distribution certificate is represented.

When the value of the present field is created, a directoryName field having a GeneralName structure is necessarily used and the receiving entity or the distribution relay server extracts a subjectDN value of the certificate in which the electronic document distribution certificate is electronically signed so as to be set as it is.

**[Table 10]**

| |
|---|
| ```
GeneralNames ::= SEQUENCE SIZE (1..MAX) OF GeneralName
GeneralName ::= CHOICE {
otherName [0] OtherName,
rfc822Name [1] IA5String,
dNSName [2] IA5String,
x400Address [3] ORAddress,
directoryName [4] Name,
ediPartyName [5] EDIPartyName,
uniformResourceIdentifier [6] IA5String,
iPAddress [7] OCTET STRING,
registeredID [8] OBJECT IDENTIFIER }
Name ::= CHOICE {
RDNSequence }
RDNSequence ::= SEQUENCE OF RelativeDistinguishedName
RelativeDistinguishedName ::= SET OF AttributeTypeAndValue
AttributeTypeAndValue ::= SEQUENCE {
type AttributeType,
value AttributeValue }
AttributeType ::= OBJECT IDENTIFIER
AttributeValue ::= ANY DEFINED BY AttributeType
DirectoryString ::= CHOICE {
teletexString TeletexString (SIZE (1..MAX)),
printableString PrintableString (SIZE (1..MAX)),
universalString UniversalString (SIZE (1..MAX)),
utf8String UTF8String (SIZE (1..MAX)),
bmpString BMPString (SIZE (1..MAX)) }
``` |

### ④ DataOfIssue, Issuance date of certificate

The time when the electronic document distribution certificate is issued is represented.

The dataOfIssue uses a GeneralizedTime format.

### ⑤ dataOfExpire, Effect expiration date of certificate

The time when the electronic document distribution certificate expires is represented.

The dataOfExpire of the electronic document distribution certificate is in the future, as compared with the dataOfIssue and needs to be set to have a sufficient spare in consideration of a period required to verify the distribution fact.

**[Table 11]**

| |
|---|
| ```
DateOfExpiration ::= GeneralizedTime
``` |

### ⑥ Policy, Certificate policy

The policy of the electronic document distribution certificate is represented.

The present field is configured of Qualifier information for representing a policy OID according to types of electronic document distribution certificates and types of electronic document distribution certificates. It is to be noted that only userNotice is used as the Qualifier information and cPSuri is not used. The types of electronic document distribution certificates are displayed using an explicitText field that is lower than the userNotice field and a format thereof needs to use BMPString.

**[Table 12]**

| |
|---|
| ```
ARCCertificatePolicies ::= SEQUENCE SIZE (1..MAX) OF Policylnformation
PolicyInformation ::= SEQUENCE {
policyldentifier CertPolicyId,
policyQualifiers SEQUENCE SIZE (1..MAX) OF
PolicyQualifierlnfo OPTIONAL }
CertPolicyld ::= OBJECT IDENTIFIER
PolicyQualifierlnfo ::= SEQUENCE {
policyQualifierId PolicyQualifierld,
qualifier ANY DEFINED BY policyQualifierId }
PolicyQualifierld ::= OBJECT IDENTIFIER (id-qt-cps \| id-qt-unotice)
Qualifier ::= CHOICE {
cPSuri CPSuri,
userNotice UserNotice }
UserNotice ::= SEQUENCE {
noticeRef NoticeReference OPTIONAL,
explicitText DisplayText OPTIONAL}
NoticeReference ::= SEQUENCE {
organization DisplayText,
noticeNumbers SEQUENCE OF INTEGER }
DisplayText ::= CHOICE {
ia5String IA5String(SIZE (1..200)),
visibleString VisibleString(SIZE (1..200)),
bmpString BMPString(SIZE (1..200)),
utf8String UTF8String(SIZE (1..200))}
``` |

The policy OID within the electronic document distribution certificate follows the types of certificates and needs to use only the values designated in the present invention.

The OID and the Qualifier information according to the type of the electronic document distribution certificate are as follows.

**[Table 13]**

| Type of Certificate | Policy OID | Qualifier |
|---|---|---|
| Transmission certificate | 1.2.410.200032.6.1 | "Transmission certificate" |
| Reception certificate | 1.2.410.200032.6.2 | "Reception certificate" |
| Reading certificate | 1.2.410.200032.6.3 | "Reading certificate" |

### ⑦ Requestlnfo, Certificate request message information

The present field is set to be null.

**[Table 14]**

| |
|---|
| ```
Requestlnfo ::= CHOICE {
arcCertRequest ARCCertRequest,
null NULL} }
``` |

### ⑧ Target, Object to certify

The present field includes the contents to be verified.

The present field needs to set the information on the distribution message by necessarily using the lower distributionlnfos field.

**[Table 15]**

| |
|---|
| ```
TargetToCertify ::= CHOICE {
opRecord [0] EXPLICIT OperationRecord,
orgAndIssued [1] EXPLICIT OriginalAndlssuedDocumentlnfo,
dataHash [2] EXPLICIT HashedDataInfo
distributionInfos [10] EXPLICIT DistributionInfos }
DistributionInfos ::= SEQUENCE OF Distributionlnfo
DistributionInfo ::= SEQUENCE {
senderAdd UTFBString,
receiptorAdd UTF8String,
dateOfSend GeneralizedTime,
dateOfReceive [0] EXPLICIT GeneralizedTime OPTIONAL,
dateOfReceiveConfirm [1] EXPLICIT GeneralizedTime OPTIONAL,
distributionId UTF8String,
numberOfFiles INTEGER,
distributedFileInfos DistributedFileInfos }
``` |

### 1) SenderAdd, Transmitter's certified electronic address

The certified electronic address of the transmitter transmitting the electronic document distribution message is represented.

### 2) ReceiverAdd, Receiptor's certified electronic address

The certified electronic address of the receiptor receiving the electronic document distribution message is represented.

### 3) DateOfsend, Transmitting date and time

The time when the distribution message is transmitted by the transmitter is represented.

The transmitting date and time of the reception certificate and the reading certificate means the time when the transmitting entity transmits the distribution message and the value of the TimeStamp field that is included in the SOAP message within the "message transmission" distribution linkage message is represented in the GeneralizedTime format.

It is to be noted that the transmitting date and time of the transmission certificate means the time when the transmitting entity requests the transmission of the distribution message to the distribution relay server and uses the time when the distribution relay server receives the "message transmission request" distribution message, unlike other distribution certificates using time values within the distribution linkage message. In connection with the time field, only the present field is included in the transmission certificate and the receiving date and time field and the reading date and time field are not created.

### 4) DateOfReceive, Receiving date and time

The time when the receiptor receives the distribution message is represented.

The receiving date and time is a field that is created only in the reception certificate and the reading certificate and is set as the time when the distribution messaging server of the receiving entity receives the "message transmission" distribution message.

The receiving date and time is after the transmitting date and time and is equal to or earlier than the time when the certificate is created.

### 5) DateOfReceiveConfirm, Reading date and time

The time when the receiptor reads the electronic document after receiving the electronic document is represented.

The reading date and time is a field that is created only in the reading certificate and is set as the time when the distribution messaging server of the receiving entity responds to the receiptor's "message detailed information request". The time needs to be equal to a value of a TimeStamp field included in the SOAP message within the distribution linkage message responding to the receiptor by the receiving entity represented in the GeneralizedTime format.

The reading date and time needs to be equal to or earlier than the time when the certificate is created and is equal to or later than the receiving date and time.

### 6) DistributionId, Distribution identification value

An identification value for the distribution message is represented.

An identifier of the distribution message that is the issuance object of the electronic document distribution certificate is set as it is.

### 7) NumberOfFiles, The number of distribution files

The number of electronic document files attached to the distribution message is represented.

The number of electronic document files attached to the actual distribution message is set.

### 8) DistributedFilelnfos, Distribution document information

The distribution message may be attached with at least one electronic document file and sets the information on the individual files using a DistributedFile structure.

**[Table 16]**

| |
|---|
| ```
DistributedFilelnfos ::= SEQUENCE OF DistributedFile
DistributedFile ::= SEQUENCE {
fileHashedData HashedDataInfo,
fileld [0] EXPLICIT UTF8String OPTIONAL,
fileName [1] EXPLICIT UTF8String OPTIONAL }
HashedDatalnfo ::= SEQUENCE {
hashAIg HashAlgorithm,
hashedData BIT STRING }
HashAlgorithm ::= Algorithmldentifier
``` |

### 9) FileHashedData, File hash information

Hash values of individual electronic document files attached to the distribution message are represented.

The individual electronic document file is set in a hashedData field after a hash value is created using a hash algorithm of a hashAIg field.

### 10) Filed, File identification value

Identifiers of individual electronic document files attached to the distribution message are represented.

The file identification value is not present within the distribution message and a Content-ID value of the individual electronic document file attached to the overall distribution linkage message configured of a Multi Part message in an MIME format is set as it is.

The field may be selectively used, but when the file name field is not used, is necessarily used and it is recommended that the file identification value field be used.

When there are both the file identification value field and the file name field at the time of the verification of the distribution certificate, the distribution certificate is compared with the electronic document file and verified by preferentially using the file identification value field.

### 11) FileName, File name

The file names of the individual electronic document files attached to the distribution message are represented.

When the file identification value field is not created, the file name field is necessarily created and as a value, the Content-ID value of the individual electronic document file attached to the overall distribution linkage message configured of the Multi Part message in the MIME format is set as it is. When the file identification value field is created, the file name field may be omitted and the value capable of auxiliarily identifying the electronic document file is set at the time of the creation of the file identification value field.

The electronic document distribution certificate profile is as the following Table 17.

**[Table 17]**

| Basic field | Content | Peculiar Matters |
|---|---|---|
| version | Version | v9 |
| serialNumber | Serial Number | Random number of 32 bytes |
| issuer | Certificate Issuer | subject DN of signature certificate |
| dateOfIssue | Issuance date of certificate | GeneralizedTime |
| dateOfExpire | Effect expiration date of certificate | GeneralizedTime |
| policy | Certificate policy | OID : 1.2.410.200032.6.1 (Transmission) |
| | | : 1.2.410.200032.6.2 (Reception) |
| | | : 1.2.410.200032.6.3 (Reading) |
| requestInfo | Certificate request message information | null |
| target | Verification object | Use of distributionInfos structure |
| senderAdd | Transmitter's certified electronic address | UTF8String |
| recei ptorAdd | Receiptor's certified electronic address | UTF8String |
| dateOfSend | Transmitting date and time | GeneralizedTime, necessary |
| dateOfReceive | Receiving date and time | GeneralizedTime, selection |
| dateOfReceiveConfirm | Receiving acknowledgement date and time | GeneralizedTime, selection |
| distributionld | Distribution identifier | UTF8String |
| numberOfFiles | The number of transmission files | |
| distributedFileInfos | Transmission file information | At least one DistributedFile |
| DistributedFile | | |
| fileHashedData | File hash value | SHA256 |
| fileld | File ID | One of two fields, that is, fileld and filename is essential |
| filename | File name | |

Considerations associated with the electronic document distribution certificate profile are as the following ① to ③.
① At the time of electronic signature, a public key encryption algorithm uses RSA and a hash algorithm uses SHA256
② The electronic signature certificate is necessarily included in signedData
③ Only one signerlnfo is included in a signerlnfos field.

### [Method for verifying electronic document distribution certificate

The distribution message transmitting entity needs to perform the verification on the certificate as soon as receiving the electronic document distribution certificate.

The process of verifying distribution certificate is largely divided into the validity verification of the certificate and the content verification of the certificate. The validity verification of the certificate is a process of confirming whether conditions for obtaining an effect as the certificate are satisfied and the content verification of the certificate is a process of confirming the fact by comparing with the distribution message to be verified through the certificate. Therefore, the content verification of the certificate is not the verification for the certificate but may be considered to be performed to confirm whether the distribution fact is truth. The validity verification of the electronic document distribution certificate is performed by the processes of ① verifying the certificate format, ② visually verifying certificate, ③ verifying the certificate electronic signature, and ④ verifying the signature certificate and the content verification of the certificate is performed by ⑤ the process of comparing and verifying the distribution message.

### ① Verification of Certificate format

The verification of the certificate format is a process of confirming whether the format of the distribution certificate to be verified observes the constraints of the structure and value defined in the present standard and the following 1) to 7) matters are basically confirmed at the time of verifying the certificate format.
1) Does the overall structure of the distribution certificate meet the signedData format and observe a rule on whether the lower field defined in the present standard is created?
2) Is the version to be set to v9?
3) Is the serial number created as the positive integer value by using the random number of 32 bytes?
4) Is the certificate issuer set by using the dirctroyName field of the GeneralName structure?
5) Are the issuance date of the certificate and the effect expiration date of the certificate set by using the GeneralizedTime format?
6) Is the certificate policy created by using the structure and values of the lower field defined in the present standard?
7) Is the verification object field created by using the distributionlnfos field and does the verification object field observe a rule on whether the lower field according to the types of certificates proposed in the certificate policy is created?

### ② Certificate visual verification

The certificate visual verification is a process of confirming whether the values of each visual field set in the distribution certificate are normal at the verification reference time. That is, it is confirmed that the values of each visual field set in the distribution certificate meets the rule of the following Table 18 unlike those at the verification reference time, during the present process.

**[Table 18]**

| |
|---|
| ```
Transmitting date and time < receiving date and time ≤ reading date and time ≤ issuance date of
certificate ≤ certificate verification time ≤ effect expiration date of certificate
``` |

### ③ Verification of certificate electronic signature

The verification of the electronic signature is a process of verifying the electronic signature attached to the distribution certificate for integrity guarantee and non-repudiation for the contents to be verified by the distribution certificate and follows the method for verifying an electronic signature for the signedData of a general CMS.

### ④ Verification of signature certificate

The verification of the signature certificate is a process of verifying the validity of the certificate in which the distribution certificate is electronically signed and the identity with the issuer information of the distribution certificate.

The validity verification of the electronic signature certificate is a process that is generally included in the process of verifying the electronic signature as a part thereof and is performed by the processes of verifying an available period of the certificate, verifying the revocation, and verifying a path with the upper CA certificates, and the like. This is verified based on "technology standard [KCAC.TS.CERTVAL] of verifying authorized certificate path" of the authorized certificate system.

If the validity verification of the electronic signature certificate succeeds, the comparison and verification with the issuer information of the distribution certificate needs to be performed. The issuer information of the distribution certificate is formed to set a subject DN value of the electronic signature certificate as it is and therefore, two values are extracted to perform the comparison and verification on whether the two values coincide with each other.

### ⑤ Comparison and verification of distribution message

The process of comparing and verifying a distribution message is not a process of verifying the validity of the distribution certificate but is a process of confirming whether the distribution fact is truth by comparing and verifying the information of the distribution message included in the distribution certificate with that of the actual distribution message.

When the transmitting entity transmits the distribution message or receives the distribution certificate after the transmission request, it is to be necessarily confirmed that the corresponding distribution certificate includes the information on the distribution message transmitted by the transmitting entity, by performing the comparison and verification of the present distribution message.

At the time of the comparison and verification of the distribution message, the following matters are basically confirmed.
- Do the transmitter's certificated electronic address and the receiptor's certified electronic address correspond to the distribution message?
- Does the transmitting date and time of the reception certificate and the reading certificate coincide with a value of TimeStamp field included in the SOAP message within the "message transmission" distribution linkage message?

- Is the transmitting date and time of the transmission certificate the reasonable time for the distribution relay server to receive the "message transmission request" distribution message?
- Is the receiving date and time of the reception certificate and the reading certificate for the "message transmission" distribution message directly transmitted to the receiving entity by the transmitting entity the reasonable time for the distribution messaging server of the receiving entity to receive the "message transmission" distribution message?
- Is the receiving date and time of the reception certificate and the reading certificate for the "message transmission request" distribution message requested to the distribution relay server by the transmitting entity the reasonable time for the distribution messaging server of the receiving entity to receive the "message transmission" distribution message? (however, correspond to only to the case in which the transmitting entity can know the time when the distribution relay server transfers the distribution message to the receiving entity).
- Does the reading date and time of the reading certificate coincide with the value of the TimeStamp field included in the SOAP message within the distribution linkage message responding to the "message detailed information request" of the receiptor by the receiving entity (however, corresponding to only the case in which the transmitting entity can know the value of the corresponding TimeStamp field).
- Does the distribution identification value coincide with the identifier of the distribution message that is the issuance object of the distribution certificate?
- Is the number of distribution files equal to the number of electronic document files attached to the actual distribution message?
- Do all of the file identification values or the file names of the individual files included in the distribution document information coincide with the Content-ID values of the electronic document file attached to the actual distribution message?
- Does all of the file hash information of the individual files included in the distribution document information coincide with the values obtained by hashing the electronic document files attached to the actual distribution message?

### [Long-term verification information of electronic signature]

When the verification for the issued distribution certificate is completed in consideration of the importance of the distribution certificate, the distribution certificate is registered and stored in the certified electronic document authority, which provides only the long-term guarantee function for the storage time and integrity of the distribution certificate but cannot guarantee the long period of time for the validity of the electronic signature certificate of the issuance time of the distribution certificate after the available period of the electronic signature certificate expires. That is, after the valid period of the electronic signature certificate expires, the validity guarantee of the distribution certificate is not permitted. In order to solve the problem, it is possible to verify the distribution certificate even after the available period of the certificate in which the distribution certificate is electronically signed expires, by storing the verification information that can confirm that the corresponding electronic signature certificate is valid at the time when the distribution certificate is issued together with the distribution certificate.

### ① Acquisition of verification information of electronic signature certificate

The transmitting entity collects CRL and ARL and an upper CA certificate and a Root CA certificate for verifying the revocation of the electronic signature certificate and the path so as to perform the process of "5.2.4 verification of signature certificate" among the processes of verifying the validity of the received distribution certificate. It is possible to guarantee the validity of the electronic signature certificate at the time of the issuance of the distribution certificate by storing the corresponding data in the certified electronic document authority together with the distribution certificate, such that the validity of the distribution certificate is guaranteed.

### ② Storage of verification information of electronic signature certificate

The transmitting entity includes the CRL and the ARL and the upper CA certificate and the Root CA certificate that are used for verification in a certificates field and a crls field within the signedData structure of the distribution certificate after the verification for the electronic signature certificate succeeds. Precautions need to perform only the work including each information in the corresponding field regardless of an order of including each information. Since the certificates field and the crls field are not the electronic signature object information of the signedData, the verification for the distribution certificate still succeeds even after the corresponding work is performed.

**[Table 19]**

| |
|---|
| ```
SignedData ::= SEQUENCE {
version CMSVersion,
digestAlgorithms DigestAlgorithmIdentifiers,
encapContentInfo EncapsulatedContentInfo,
certificates [0] IMPLICIT CertificateSet OPTIONAL,
crls [1] IMPLICIT RevocationInfoChoices OPTIONAL,
signerInfosSignerInfos }
``` |

### ③ Storage in certificated electronic document authority

The transmitting entity stores the distribution certificate in which the verification information of the electronic signature certificate is included in the certified electronic document authority, such that the long-term verification for the distribution certificate can be performed.

## Claims

1. A method for creating/issuing a distribution certificate including a reception certificate, a transmission certificate and a reading certificate in a system for distributing an electronic document including transmitting and receiving entities (101)/(102) and a distribution hub (103), the method comprising:
(a) transmitting, by a transmitting entity (101), a distribution message including a transmitter's electronic document to a receiving entity (102);
(b) creating, by a receiving entity (102), the reception certificate by acquiring essential information after receiving the distribution message;
(c) transmitting, by the receiving entity (102), the created reception certificate to the transmitting entity (101);
(d) completing, by the transmitting entity (101), verification for the received reception certificate and then, attaching verification information on an electronic signature certificate of the reception certificate to the received reception certificate; and
(e) transmitting, by the transmitting entity (101), the reception certificate attached to the verification information to a third party storage authority (104) and requesting the storage thereto,
wherein the verification information includes information related to the validity verification of the distribution certificate and information related to the content verification of the distribution certificate.

2. The method of claim 1, wherein in the step (b), when the receiving entity (102) creates the reception certificate, the essential information includes electronic document information, a transmitter, a receiptor, a transmitter transmitting time, and a receiptor receiving time.

3. The method of claim 1, further comprising:
in the step (a), when the transmitting entity (101) tries the transmission of the distribution message to the receiving entity (102) but fails in the transmission of the distribution message,
(a1) requesting, by the transmitting entity (101), the transmission of the 18 distribution message to a distribution relay server of the distribution hub (103);
(a2) creating, by the distribution relay server, the transmission certificate for the requested transmission;
(a3) transmitting, by the distribution relay server, the transmission certificate to the transmitting entity (101);
(a4) completing, by the transmitting entity (101), the verification for the received transmission certificate and then, attaching the verification information on the electronic signature certificate of the transmission certificate to the received transmission certificate; and
(a5) transmitting, by the transmitting entity (101), the transmission certificate attached the verification information to the third party storage authority (104) and requesting the storage thereto;
(a6) transmitting, by the distribution relay server, the distribution message to the receiving entity (102);
(a7) creating, by the receiving entity (102), the reception certificate immediately after receiving the electronic document;
(a8) transmitting, by the receiving entity (102), the reception certificate to the distribution relay server;
(a9) transmitting, by the distribution relay server, the reception certificate to the transmitting entity (101); and
(a10) performing, by the transmitting entity (101), steps (d) and (e) in order.

4. The method of claim 3, wherein in the step (a2), when the distribution relay server creates the transmission certificate, the essential information includes electronic document information, a transmitter, a receiptor, and a transmitter transmitting request time.

5. The method of claim 1, further comprising:
the system for distributing the electronic document further including a receiptor receives the electronic document from the receiving entity (102),
after the step (e),
(f1) reading, by the receiptor, the distribution message received by requesting the reading of the distribution message to the receiving entity (102);
(f2) creating, by the receiving entity (102), the reading certificate;
(f3) completing the verification for the received reading certificate and then, attaching the verification information on the electronic signature certificate of the reading certificate to the received reading certificate; and
(f4) transmitting, by the transmitting entity (101), the reading certificate attached to the verification information to the third party storage authority (104) and requesting the storage thereto.

6. The method of claim 3, further comprising:
after the step (a10),
(a11) reading, by the receiptor, the distribution message received by requesting the reading of the distribution message to the receiving entity (102);
(a12) creating, by the receiving entity (102), the reading certificate;
(a13) completing the verification for the received reading certificate and then, attaching the verification information on the electronic signature certificate of the reading certificate to the received reading certificate; and
(a14) transmitting, by the transmitting entity (101), the reading certificate attached to the verification information to the third party storage authority (104) and requesting the storage thereto.

7. The method of claim 5 or 6, wherein when the receiving entity (102) creates the reading certificate, the necessary information includes electronic document information, a transmitter, a receiptor, a transmitter transmitting time, a receiptor receiving time, and a receiptor reading time.

8. A system for distributing an electronic document, comprising:
Transmitting and receiving entities (101)/(102) that distribute an electronic document through a distribution messaging server transmitting and receiving a message based on an electronic document and issuing and managing a distribution certificate for message transmission and reception;
a distribution hub (103) that registers/manages the electronic addresses of the transmitting and receiving entities (101)/(102), sets an electronic document distribution path between the transmitting and receiving entities (101)/(102), performs message transmission when errors are created during an electronic document distribution process between the transmitting and receiving entities (101)/(102), and issues the distribution certificate; and
a trusted third party storage authority (104) that receives and stores the distribution certificate;
wherein the distribution certificate includes a reception certificate for non-repudiation for the fact that a receiving entity (102) receives a message, a transmission certificate for verifying a transmission try of the transmit entity (101), and a reading certificate for non-repudiation for the fact that a receiptor reads the received message,
wherein the receiving entity (102) creating a reception certificate included the distribution certificate by acquiring essential information after receiving a distribution message from the transmitting entity (101), and transmitting the created reception certificate to the transmitting entity (101),
and the transmitting entity (101) completing verification for the received reception certificate and then, attaching verification information on an electronic signature certificate of the reception certificate to the received reception certificate, and transmitting the reception certificate to the third party storage authority (104) and requesting the storage thereto,
wherein the verification information includes information related to the validity verification of the distribution certificate and information related to the content verification of the distribution certificate.

## Patentansprüche

1. Verfahren zum Erstellen/Ausstellen eines Verteilungszertifikats einschließlich eines Empfangszertifikats, eines Übertragungszertifikats und eines Lesezertifikats in einem System zum Verteilen eines elektronischen Dokuments einschließlich Übertragungs- und Empfangseinheiten (101)/(102) und einem Verteilungshub (103), wobei das Verfahren Folgendes umfasst:
(a) Übertragen einer Verteilungsmitteilung einschließlich eines elektronischen Dokuments eines Senders an eine Empfangseinheit (102) durch eine Übertragungseinheit (101);
(b) Erstellen des Empfangszertifikats durch eine Empfangseinheit (102) durch Beschaffen wesentlicher Informationen nach dem Empfang der Verteilungsmitteilung;
(c) Übertragen des erstellten Empfangszertifikats an die Übertragungseinheit (101) durch die Empfangseinheit (102);
(d) Vervollständigen der Verifizierung für den erhaltenen Empfangszertifikat durch die Übertragungseinheit (101), und dann Anfügen der Verifizierungsinformation an einen elektronischen Signaturzertifikat des Empfangszertifikats an den erhaltenen Empfangszertifikat; und
(e) Übertragen des Empfangszertifikats, der an die Verifizierungsinformation angefügt ist, durch die Übertragungseinheit (101) an eine Speicherstelle (104) einer dritten Partei und Anfragen der Speicherung hierin,
wobei die Verifizierungsinformation Information bezüglich der Gültigkeits-Verifizierung des Verteilungszertifikats und Information bezüglich der Inhalts-Verifizierung des Verteilungszertifikats beinhaltet.

2. Verfahren gemäß Anspruch 1, wobei in Schritt (b), wenn die Empfangseinheit (102) den Empfangszertifikat erstellt, die wesentlichen Informationen eine elektronische Dokumentinformation, einen Sender, einen Empfänger, eine Senderübertragungszeit und eine Empfangszeit beim Empfänger beinhalten.

3. Verfahren gemäß Anspruch 1, das des Weiteren Folgendes umfasst:
in Schritt (a), wenn die Übertragungseinheit (101) die Übertragung der Verteilungsmitteilung an die Empfangseinheit (102) versucht, aber bei der Übertragung der Verteilungsmitteilung scheitert,
(a1) Anfragen der Übertragung der Verteilungsmitteilung an den Verteilungsrelay-Server des Verteilungshubs (103) durch die Übertragungseinheit (101);
(a2) Erstellen des Übertragungszertifikats für die angefragte Übertragung durch den Verteilungsrelay-Server;
(a3) Übertragen des Übertragungszertifikats an die Übertragungseinheit (101) durch den Verteilungsrelay-Server;
(a4) Vervollständigen der Verifizierung für den empfangenen Übertragungszertifikat durch die Übertragungseinheit (101) und dann Anhängen der Verifizierungsinformation auf dem elektronischen Signaturzertifikat des Übertragungszertifikats an den empfangenen Übertragungszertifikat; und
(a5) Übertragen des Übertragungszertifikats durch die Übertragungseinheit (101), wobei die Verifizierungsinformation an die Speicherstelle der dritten Partei (104) angefügt ist, und
die Anfrage der Speicherung hierauf;
(a6) Übertragen der Verteilungsmitteilung an die Empfangseinheit (102) durch den Verteilungsrelay-Server;
(a7) Erstellen des Empfangszertifikats durch die Empfangseinheit (102) sofort nach dem Empfangen des elektronischen Dokuments;
(a8) Übertragen des Empfangszertifikats an den Verteilungsrelay-Server durch die Empfangseinheit (102);
(a9) Übertragen des Empfangszertifikats an die Übertragungseinheit (101) durch den Verteilungsrelay-Server; und
(a10) Durchführen der Schritte (d) und (e) in dieser Reihenfolge durch die Übertragungseinheit (101).

4. Verfahren gemäß Anspruch 3, wobei beim Schritt (a2), wenn der Verteilungsrelay-Server das Übertragungszertifikat erstellt, die wesentlichen Informationen eine elektronische Dokumentinformation, einen Sender, einen Empfänger und einen Sender, der die Anfragezeit sendet, beinhalten.

5. Verfahren gemäß Anspruch 1, das des Weiteren Folgendes umfasst:
das System zum Verteilen des elektronischen Dokuments, das darüber hinaus einen Empfänger einschließt, der das elektronische Dokument von der Empfangseinheit (102) empfängt, nach Schritt (e), (f1) Lesen der Verteilungsmitteilung durch den Empfänger, die empfangen wurde, nachdem an die Empfangseinheit (102) die Anfrage gestellt wurde, die Verteilungsmitteilung zu lesen;
(f2) Erstellen des Lesezertifikats durch die Empfangseinheit (102);
(f3) Vervollständigen der Verifizierung für das empfangenen Lesezertifikat und dann Anfügen der Verifizierungsinformation auf dem elektronischen Signaturzertifikat des Lesezertifikats an das empfangenen Lesezertifikat; und (f4) Übertragen des Lesezertifikats, der an die Verifizierungsinformation angefügt ist, durch die Übertragungseinheit (101) an die Speicherstelle (104) der dritten Partei und Anfragen der Speicherung darin.

6. Verfahren gemäß Anspruch 3, das des Weiteren Folgendes umfasst:
nach dem Schritt (a10) (a11) Lesen der Verteilungsmitteilung durch den Empfänger, die empfangen wurde, nachdem an die Empfangseinheit (102) die Anfrage gestellt wurde, die Verteilungsmitteilung zu lesen;
(a12) Erstellen des Lesezertifikats durch die Empfangseinheit (102);
(a13) Vervollständigen der Verifizierung für das empfangenen Lesezertifikat und dann Anfügen der Verifizierungsinformation auf dem elektronischen Signaturzertifikat des Lesezertifikats an das empfangenen Lesezertifikat; und
(a14) Übertragen des Lesezertifikats, der an die Verifizierungsinformation angefügt ist, durch die Übertragungseinheit (101) an die Speicherstelle (104) der dritten Partei und Anfragen der Speicherung darin.

7. Verfahren gemäß Anspruch 5 oder 6, wobei die notwendigen Informationen eine elektronische Dokumentinformation, einen Sender, einen Empfänger, eine Übertragungszeit des Sender, eine Empfangszeit des Empfängers und eine Lesezeit des Empfängers beinhalten, wenn die Empfangseinheit (102) das Lesezertifikat erstellt.

8. System zum Verteilen eines elektronischen Dokuments, das umfasst:
übertragende und empfangende Einheiten (101)/(102), die ein elektronisches Dokument durch einen Nachrichten verteilenden Server verteilen, der eine Nachricht überträgt und empfängt, welche auf einem elektronischen Dokument beruht, und ein Verteilungszertifikat für die Übertragung und den Empfang der Nachricht ausstellt und verwaltet;
einen Verteilungshub (103), das die elektronischen Adressen der übertragenden und empfangenden Einheiten (101)/(102) erfasst/verwaltet, einen Verteilungsweg für das elektronische Dokument zwischen den übertragenden und empfangenden Einheiten (101)/(102) festlegt, das Übertragen der Nachricht zwischen den übertragenden und empfangenden Einheiten (101)/(102) ausführt, wenn während eines Verteilungsprozesses eines elektronischen Dokuments Fehler entstehen, und das Verteilungszertifikat ausstellt;
und eine Speicherstelle einer zuverlässigen dritten Partei (104), die das Verteilungszertifikat empfängt und speichert;
wobei das Verteilungszertifikat ein Empfangszertifikat für die Unleugbarkeit der Tatsache beinhaltet, dass eine Empfangseinheit (102) eine Nachricht empfängt, und ein Übertragungszertifikat zum Verifizieren eines Übertragungsversuchs der übertragenden Einheit (101) und ein Lesezertifikat für die Unleugbarkeit der Tatsache, dass ein Empfänger die empfangene Nachricht liest, wobei die Empfangseinheit (102) ein Empfangszertifikat einschließlich des Verteilungszertifikats erstellt durch Beschaffen wesentlicher Information nach dem Empfangen einer Verteilungsmitteilung von der Übertragungseinheit (101) und das erstellte Empfangszertifikat an die Übertragungseinheit (101) überträgt, und die Übertragungseinheit (101) die Verifizierung für den empfangenen Empfangszertifikat vervollständigt und dann eine Verifizierungsinformation auf einem elektronischen Signaturzertifikat des Empfangszertifikats an den empfangenen Empfangszertifikat anfügt und den Empfangszertifikat an die Speicherstelle der dritten Partei (104) überträgt und die Speicherung hierauf anfragt, wobei die Verifizierungsinformationen Informationen bezüglich der Verifizierung der Gültigkeit des Verteilungszertifikats und Informationen bezüglich der Verifizierung des Inhalts des Verteilungszertifikats beinhalten.

## Revendications

1. Procédé pour la création/l'émission d'un certificat de distribution comprenant un certificat de réception, un certificat de transmission et un certificat de lecture dans un système pour distribuer un document électronique comprenant des entités de transmission et de réception (101)/(102) et une plate-forme de distribution (103), le procédé comprenant :
(a) la transmission, par une entité de transmission (101), d'un message de distribution comprenant un document électronique de l'émetteur à une entité de réception (102) ;
(b) la création, par une entité de réception (102) du certificat de réception en obtenant des informations essentielles après réception du message de distribution ;
(c) la transmission, par l'entité de réception (102) du certificat de réception créé à l'entité de transmission (101) ;
(d) l'achèvement, par l'entité de transmission (101), de la vérification pour le certificat de réception reçu et ensuite, l'ajout d'informations de vérification sur un certificat de signature électronique du certificat de réception au certificat de réception reçu ; et
(e) la transmission, par l'entité de transmission (101), du certificat de réception joint aux informations de vérification à une autorité de stockage de tiers (104) et la demande de stockage correspondante,
dans lequel les informations de vérification comprennent des informations liées à la vérification de validité du certificat de distribution et des informations liées à la vérification de contenu du certificat de distribution.

2. Procédé selon la revendication 1, dans lequel, dans l'étape (b), quand l'entité de réception (102) crée le certificat de réception, les informations essentielles comprennent des informations de document électronique, un émetteur, un récepteur, un temps de transmission d'émetteur et un temps de réception de récepteur.

3. Procédé selon la revendication 1, comprenant en outre :
dans l'étape (a), quand l'entité de transmission (101) essaie de transmettre le message de distribution à l'entité de réception (102) mais échoue dans la transmission du message de distribution, (a1) la demande, par l'entité de transmission (101), de la transmission du message de distribution à un serveur de relais de distribution de la plate-forme de distribution (103) ;
(a2) la création, par le serveur de relais de distribution, du certificat de transmission pour la transmission requise ;
(a3) la transmission, par le serveur de relais de distribution, du certificat de transmission à l'entité de transmission (101) ;
(a4) l'achèvement, par l'entité de transmission (101), de la vérification pour le certificat de transmission reçu et ensuite, l'ajout des informations de vérification sur le certificat de signature électronique du certificat de transmission au certificat de transmission reçu ;
et
(a5) la transmission, par l'entité de transmission (101), du certificat de transmission joint aux informations de vérification à l'autorité de stockage de tiers (104) et la demande de stockage correspondante ;
(a6) la transmission, par le serveur de relais de distribution, du message de distribution à l'entité de réception (102) ;
(a7) la création, par l'entité de réception (102), du certificat de réception immédiatement après réception du document électronique ;
(a8) la transmission, par l'entité de réception (102), du certificat de réception au serveur de relais de distribution ;
(a9) la transmission, par le serveur de relais de distribution, du certificat de réception à l'entité de transmission (101) ; et
(a10) la réalisation, par l'entité de transmission (101), des étapes (d) et (e) dans l'ordre.

4. Procédé selon la revendication 3, dans lequel, dans l'étape (a2), quand le serveur de relais de distribution crée le certificat de transmission, les informations essentielles comprennent des informations de document électronique, un émetteur, un récepteur et un temps de demande de transmission d'émetteur.

5. Procédé selon la revendication 1, comprenant en outre :
le système pour distribuer le document électronique incluant en outre la réception, par un récepteur, du document électronique de l'entité de réception (102), après l'étape (e),
(f1) la lecture, par le récepteur, du message de distribution reçu en demandant la lecture du message de distribution à l'entité de réception (102) ;
(f2) la création, par l'entité de réception (102), du certificat de lecture ;
(f3) l'achèvement de la vérification pour le certificat de lecture reçu et ensuite, l'ajout des informations de vérification sur le certificat de signature électronique du certificat de lecture au certificat de lecture reçu, et
(f4) la transmission, par l'entité de transmission (101), du certificat de lecture joint aux informations de vérification à l'autorité de stockage de tiers (104) et la demande de stockage correspondante.

6. Procédé selon la revendication 3, comprenant en outre :
après l'étape (a10)
(a11) la lecture, par le récepteur, du message de distribution reçu en demandant la lecture du message de distribution à l'entité de réception (102) ;
(a12) la création, par l'entité de réception (102), du certificat de lecture,
(a13) l'achèvement de la vérification pour le certificat de lecture reçu et ensuite, l'ajout des informations de vérification sur le certificat de signature électronique du certificat de lecture au certificat de lecture reçu ; et
(a14) la transmission, par l'entité de transmission (101), du certificat de lecture joint aux informations de vérification à l'autorité de stockage de tiers (104) et la demande de stockage correspondante.

7. Procédé selon la revendication 5 ou 6, dans lequel quand l'entité de réception (102) crée le certificat de lecture, les informations nécessaires comprennent des informations de document électronique, un émetteur, un récepteur, un temps de transmission d'émetteur, un temps de réception de récepteur, et un temps de lecture de récepteur.

8. Système de distribution d'un document électronique, comprenant :
des entités de transmission et de réception (101)/(102) qui distribuent un document électronique par le biais d'un serveur de messagerie de distribution transmettant et recevant un message sur la base d'un document électronique et émettant et gérant un certificat de distribution pour la transmission et la réception d'un message ;
une plate-forme de distribution (103) qui enregistre/gère les adresses électroniques des entités de transmission et de réception (101)/(102), établit un chemin de distribution de document électronique entre les entités de transmission et de réception (101)/(102), effectue une transmission de message quand des erreurs sont créées pendant un processus de distribution de document électronique entre les entités de transmission et de réception (101)/(102) et émet le certificat de distribution ; et une autorité de stockage de tiers de confiance (104) qui reçoit et stocke le certificat de distribution ;
dans lequel le certificat de distribution comprend un certificat de réception pour non-répudiation pour le fait qu'une entité de réception (102) reçoit un message, un certificat de transmission pour vérifier une tentative de transmission de l'entité de transmission (101) et un certificat de lecture pour non-répudiation pour le fait qu'un récepteur lit le message reçu, dans lequel l'entité de réception (102) créant un certificat de réception a inclus le certificat de distribution en acquérant des informations essentielles après réception d'un message de distribution de l'entité de transmission (101) et en transmettant le certificat de réception créé à l'entité de transmission (101) et l'entité de transmission (101) achevant la vérification pour le certificat de réception reçu et ensuite, joignant les informations de vérification sur un certificat de signature électronique du certificat de réception au certificat de réception reçu, et transmettant le certificat de réception à l'autorité de stockage de tiers (104) et demandant le stockage correspondant, dans lequel les informations de vérification comprennent des informations liées à la vérification de validité du certificat de distribution et des informations liées à la vérification de contenu du certificat de distribution.
